# EUROPÄISCHE PATENTSCHRIFT

(11) **EP 2 542 789 B1**
(45) Veröffentlichungstag und Bekanntmachung des Hinweises auf die Patenterteilung: **23.04.2014**
(21) Anmeldenummer: 11706464.2
(22) Anmeldetag: 23.02.2011
(51) Int. Cl.: F16B 7/04, B21B 27/10

(54) **VORRICHTUNG MIT ZWEI DURCH EIN SPANNTEIL IN DEFINIERTER RELATIVER WINKELPOSITION LÖSBAR VERBINDBAREN BAUTEILEN**
APPARATUS HAVING TWO COMPONENTS WHICH CAN BE CONNECTED RELEASABLY IN A DEFINED RELATIVE ANGULAR POSITION BY A CLAMPING PART
DISPOSITIF PRÉSENTANT DEUX PIÈCES POUVANT ÊTRE ASSEMBLÉES DE MANIÈRE AMOVIBLE PAR UN ÉLÉMENT DE SERRAGE DANS UNE POSITION ANGULAIRE RELATIVE DÉFINIE

(30) Priorität: 02.03.2010 CH 266102010
(43) Veröffentlichungstag der Anmeldung: 09.01.2013
(73) Patentinhaber: BBA Innova AG, 5000 Aarau (CH)
(72) Erfinder: KIRCHHOFER, Urs, CH-6204 Sempach (CH)
(74) Vertreter: Rentsch Partner AG
(86) Internationale Anmeldenummer: PCT/CH2011/000033
(87) Internationale Veröffentlichungsnummer: WO 2011/106903

(56) Entgegenhaltungen:
- EP-A2- 0 899 030
- GB-A- 2 338 261
- US-A- 4 671 478

## Beschreibung

### TECHNISCHES GEBIET

Die vorliegende Erfindung betrifft eine Vorrichtung mit zwei durch ein Spannteil in definierter relativer Winkelposition lösbar verbindbaren Bauteilen, gemäß dem Oberbegriff des Anspruchs 1. Eine derartige Vorrichtung ist aus der GB 2 338 261 A bekannt.

Derartige Vorrichtungen werden beispielsweise benötigt für demontierbare oder auswechselbare Maschinenteile, bei modularen Baukästen oder Gestellen, zur Verbindung von Welle und Nabe von Wechselrädern, für unterschiedliche Kurvenscheiben oder zur Befestigung einer Scheibe bzw. allgemein eines Flachteils am freien Ende einer Stange oder einer rotierenden Welle.

Benötigt werden solche Vorrichtungen speziell auch bei Walzenkühlvorrichtungen zur kontinuierlichen Überführung einer heissen, fliessfähigen Masse unter Abkühlung in feste Chips, wobei zu Reinigungszwecken einfach und schnell zu demontierende Umlenkrollen oder Abstreifer in einem definierten Abstand zu den Walzen dieser Kühlvorrichtungen gehalten werden müssen.

### STAND DER TECHNIK

Bekannte Vorrichtungen verwenden Querkeile in geschlitzten Wellen oder Nasenkeile in genuteten Wellen und Naben, wobei jedoch wegen der Klemmwirkung dieser Keile eine Montage und/oder Demontage ohne Werkzeug kaum möglich ist. In der Regel ist eine für den Anwender bestimmungsgemäss vorgesehene Montage oder Demontage dieser Vorrichtungen auch gar nicht vorgesehen.

### DARSTELLUNG DER ERFINDUNG

Aufgabe der Erfindung ist es, eine Vorrichtung der betrachteten Art anzugeben, die sich ohne Werkzeug einfach und schnell montieren und demontieren lässt. Gelöst wird diese Aufgabe durch eine Vorrichtung mit den Merkmalen des Anspruchs 1.

Die erfindungsgemässe Vorrichtung ist demnach dadurch gekennzeichnet, dass ein erstes der beiden Bauteile einen Endabschnitt aufweist, der ausgehend von einer kreiszylindrischen Form durch Abflachung mit einer ersten, ebenen Anschlagfläche sowie mit einer exzentrischen, mit ihm nur teilweise, dagegen mit der ersten Anschlagfläche überhaupt nicht überlappenden, stirnseitigen Bohrung versehen ist, dass das andere, zweite Bauteil eine erste zylindrische Öffnung aufweist, welche mit einer zweiten, ebenen Anschlagfläche sowie einer Positionier- und einer Klemmfläche versehen ist, wobei zwischen diesen Flächen jeweils Erweiterungen vorhanden sind, und dass das Spannteil einen mit einem Handgriff versehenen, unrunden, zylindrischen Spannzapfen aufweist, dessen grösstes Mass dem der Bohrung im Endabschnitt des ersten Bauteils entspricht und der zum Verspannen der beiden Bauteile durch die erste Öffnung hindurch in diese Bohrung einsteckbar und darin unter zunehmender Druckausübung auf die Klemmfläche bei gleichzeitiger Anlage der Anschlagflächen aneinander sowie der Positionierfläche an der Mantelfläche des Endabschnitts des ersten Bauteils verdrehbar ist. Unter "unrund zylinderisch" soll hierbei eine nicht kreiszylinderische Form verstanden werden, deren Mass unter Ausbildung einer Art Keilfläche über ihren Umfang von einem kleinsten zu einem grössten Mass zunimmt.

Durch die Erweiterungen der Öffnung im zweiten Bauteil jeweils zwischen der zweiten Anschlagfläche, der Positionier- und der Klemmfläche kann dieses mit Spiel einfach auf das erste Bauteil aufgeschoben werden. Mit der Drehbewegung des unrunden Spannzapfens in der exzentrisch angeordneten Bohrung im ersten Bauteil wird eine Keilwirkung zwischen den beiden zu verbindenen Bauteilen erzeugt, welche in einer bestimmten Drehstellung des Spannzapfens das Spiel zwischen ihnen aufhebt. Selbst nach Erreichen dieser bestimmten Drehstellung kann der Spannzapfen aber noch ein Stück weitergedreht werden, wobei sich an der Relativstellung der beiden Bauteile jedoch nichts mehr ändert. Nur die Keilwirkung wird weiter verstärkt. Dieses Nachdrehen ist umso weiter möglich, je geringer die Steigung der auf dem Umfang des Spannzapfens ausgebildeten Keilfläche ist. Zur festen und winkelgenauen Verbindung der beiden Bauteile ist eine exakte Drehstellung des Spannzapfens jenseits der bestimmten Drehstellung daher nicht erforderlich.

Die erreichte Verbindung lässt sich zerstörungsfrei wieder lösen und beliebig oft herstellen. Indem der Spannzapfen mit einem Handgriff versehen ist, ist zu seiner Bedienung kein Werkzeug notwendig. Die Bauteile sind infolge ihrer einfachen und grossflächig ausführbaren Geometrien gut und leicht zu einigen.

Bevorzugte Ausgestaltungen der Erfindung sind in den abhängigen Ansprüchen angegeben.

Danach ist es bevorzugt, dass der Durchmesser des Endabschnitts des ersten Bauteils 1.5 - 4-fach grösser ist als der der Bohrung in diesem Endabschnitt,
und/oder dass die Bohrung im Endabschnitt des ersten Bauteils gegenüber der Achse dieses Endabschnitts um das 0.25 - 1.5-fache ihres Durchmessers exzentrisch versetzt ist,
und/oder dass die Bohrung im Endabschnitt des ersten Bauteils gegenüber der Achse dieses Endabschnitts unter einem Winkel von 20° - 70° gegenüber der ersten Anschlagfläche exzentrisch versetzt ist.

Die Positionier- (24) und/oder die Klemmfläche (25) liegen vorzugsweise auf einer gedachten Kreiszylindermantelfäche, deren Durchmesser weiter vorzugsweise dem der kreiszylindrischen Ausgangsform des Endabschnitts (11) des ersten Bauteils (10) entspricht.

Sofern die zweite, ebene Anschlagfläche, die Positionier- und die Klemmfläche von der Achse der gedachten Kreiszylindermantelfäche aus gesehen unter einem Relativwinkel von 40° - 140°, insbesondere von 10°- 130°, angeordnet sind, ergibt sich eine im wesentlichen symmetrische, im Hinblick auf die wirkenden Kräfte günstige Geometrie.

Ausreichend grosse Positionier- und/oder Klemmflächen ergeben sich, wenn sich diese über einen Winkelbereich Δα von 10° - 30°, vorzugsweise von 20°, erstrecken.

Sofern sich der Durchmesser des Spannzapfens über seinen Umfang nur um 1% - 5%, beispielsweise um 3%, ändert, ergibt sich ein relativ sanfter Übergang über die genannte, bestimmte Drehstellung hinweg zwischen den Drehstellungen, in denen die beiden Bauteile noch Spiel haben und den Drehstellungen, in denen sie miteinander verspannt sind. Der wirksame Keil hat dabei eine Steigung von 0.3% - 1.6 %.

Als Handgriff für das Spannteil eignet sich insbesondere ein Hebelarm. Um ein ungewolltes Lösen der Verspannung z.B. in Folge von Vibrationen zu verhindern, kann dieser Hebelarm mit einem vorzugsweise in das zweite Bauteil einsteckbaren Arretierbolzen gegen Zurückdrehen aus einer Spannstellung jenseits der bestimmten Drehstellung arretiert werden.

Um ein ungewolltes Lösen der Verspannung z.B. in Folge von Vibrationen zu verhindern, kann auch vorgesehen sein, dass beim Verdrehen des durch die erste Öffnung im zweiten Bauteil hindurch in die Bohrung im Endabschnitt des ersten Bauteils eingesteckten Spannzapfens die Druckausübung auf die Klemmfläche nach Überwinden eines Maximalwertes wieder abnimmt. Erreicht werden kann dies beispielsweise, indem bei der Überwindung des Maximalwertes das zweite Bauteil (20) und/oder ein vorzugsweise im Spannzapfen eingelassenes Federelement durch den ausgeübten Druck elastisch deformiert wird.

Insbesondere für eine Verwendung bei einer der eingangs erwähnten Walzenkühlvorrichungen kann das erste Bauteil stangenförmig ausgebildet sein und weiteren Abschnitt mit einer kreiszylindrischen Mantelfläche aufweisen, deren Durchmesser gleich oder grösser als der seines kreiszylindrischen Endabschnitt ist. Für die gleiche Verwendung kann das zweite Bauteil insbesondere ein Bügel mit zwei Armen sein, wobei die erste Öffnung in dem einen Arm und eine weitere, kreiszylindrische Öffnung in dem anderen Arm ausgebildet ist, so dass der Bügel auf das stangenförmige Bauteil aufschiebbar ist, wobei die erste Öffnung mit Spiel den Endabschnitt und die weitere Öffnung den weiteren Abschnitt des stangenförmigen Bauteils passgenau übergreift. Der Bügel kann im Rahmen dieser Verwendung dann weiter eine Umlenkrolle oder einen Abstreifer in einem definierten Abstand von einer Walze der Walzenkühlvorrichtung halten.

### KURZE ERLÄUTERUNG DER FIGUREN

Die Erfindung soll nachfolgend anhand von Ausführungsbeispielen im Zusammenhang mit der Zeichnung näher erläutert werden. Es zeigen:
- Fig. 1: eine Vorrichtung mit zwei durch ein Spannteil in definierter relativer Winkelposition lösbar verbindbaren Bauteilen nach der Erfindung, wobei die Bauteile und das Spannteil separat dargestellt sind;
- Fig. 2: unter a) - c) Aufsichten auf die vorgenannten Teile von Fig. 1;
- Fig. 3: die zwei Bauteile mit dem Spannteil von Fig. 1 miteinander verbunden;
- Fig. 4: in perspektivischer Darstellung eine Walzenkühlvorrichtung mit mehreren erfindungsmässen Vorrichtungen zur winkelgenauen Befestigung von Umlenkrollen und Abstreifern;
- Fig. 5: in perspektivischer Darstellung eine Umlenkrollenhalterung einer Walzenkühlvorrichtung mit einer erfindungsmässen Vorrichtung;
- Fig. 6: in Stirnansichten einen Abstreifer einer Walzenkühlvorrichtung mit einer erfindungsgemässen Vorrichtung unter a) befestigt in seiner Funktionsstellung an einer Walze und unter b) in einer gelösten Stellung;
- Fig. 7: unter a) - c) jeweils einen Querschnitt durch den Endabschnitt des ersten Bauteiles, durch das zweite Bauteil sowie durch den Spannzapfen des Spannteils in drei unterschiedlichen Drehstellungen; und
- Fig. 8: in einer Darstellung gemäss Fig. 2 c) ein Spannteil mit einem in seinem Spannzapfen eingelassenen Federelement.

### WEGE ZUR AUSFÜHRUNG DER ERFINDUNG

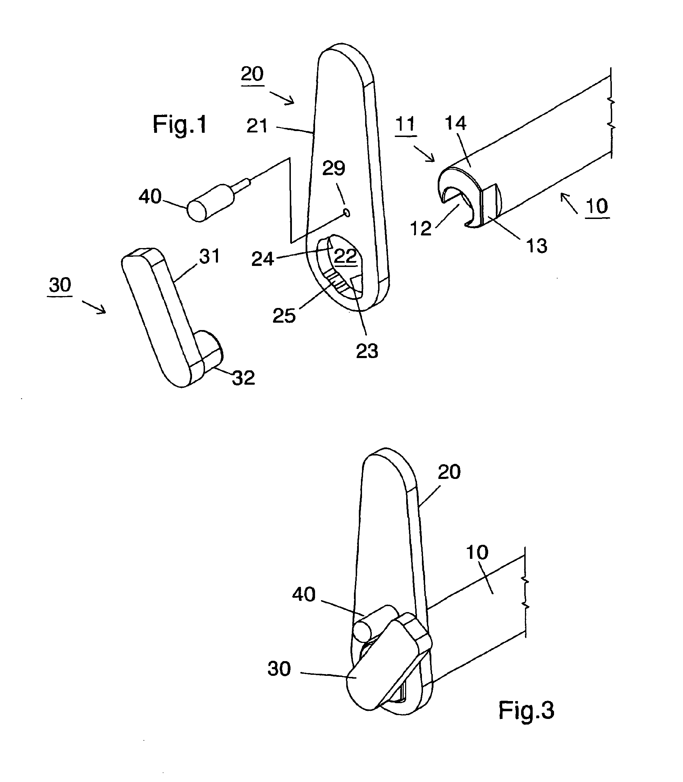

Fig. 1 zeigt eine Vorrichtung mit zwei durch ein Spannteil 30 in definierter relativer Winkelposition lösbar verbindbaren Bauteilen 10 und 20 nach der Erfindung, wobei die Bauteile 10, 20 und das Spannteil 30 nach Art einer Explosionszeichnung jeweils separat dargestellt sind. Zusätzlich dargestellt ist ein Arretierbolzen 40.

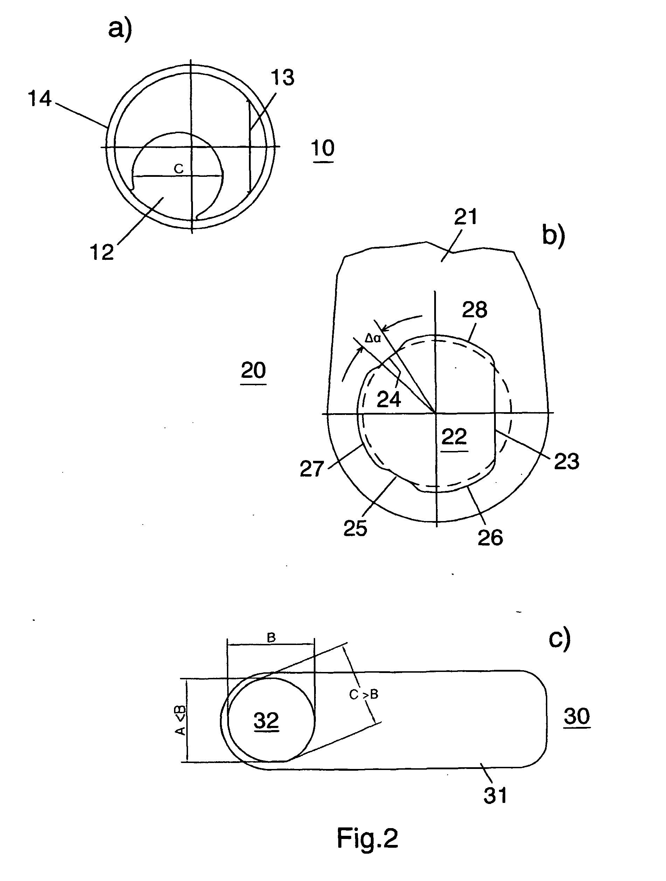

Das in Fig. 1 perspektivisch nur teilweise und in Fig. 2 a) stirnseitig dargestellte Bauteil 10 ist im Hinblick auf die später noch erläuterte Anwendung stangenförmig ausgebildet, wobei eine andere als eine stangenförmige Form ebenfalls möglich wäre. Im Zusammenhang mit der Erfindung kommt es hier vor allem auf den Endabschnitt 11 an. Dieser ist ausgehend von einer kreiszylindrischen Form durch seitliche Abflachung seiner Mantelfläche 14 mit einer ersten, ebenen Anschlagfläche 13 sowie mit einer exzentrischen, mit ihm nur teilweise, dagegen mit der ersten Anschlagfläche 13 überhaupt nicht überlappenden, stirnseitigen Bohrung 12 versehen.

Das zweite Bauteil 20 ist ebenfalls im Hinblick auf die später noch erläuterte Anwendung in Form eines flachen Hebelarmes 21 ausgebildet, wobei auch hier eine andere Form möglich wäre. Im Zusammenhang mit der Erfindung kommt es vor allem auf die zylindrische Öffnung 22 an. Diese ist mit einer zweiten, ebenen Anschlagfläche 23, einer Positionierfläche 24 und einer Klemmfläche 25 versehen. Die Positionierfläche 24 und die Klemmfläche 25 liegen auf einer durch einen strichlierten Kreis in Fig. 2 b) angedeuteten, gedachten Kreiszylindermantelfläche, deren Durchmesser dem der kreiszylindrischen Ausgangsform des Endabschnitts 11 am ersten Bauteil 10 entspricht. Sie erstrecken sich auf dieser Fläche über einen nicht notwendig gleich grossen Winkelbereich Δα, wie dies für die Positionierfläche 24 in Fig. 2 b) angegeben ist. Zwischen den Flächen 23, 24 und 25 sind jeweils Erweiterungen 26, 27 und 28 vorhanden, wie dies dies in Fig. 2 b) ebenfalls zu erkennen ist. Die zweite, ebene Anschlagfläche 23, die Positionierfläche 24 und die Klemmfläche 25 sind von der Achse der gedachten Kreiszylindermantelfäche aus gesehen unter einem Relativwinkel von 110°-130° angeordnet.

Das Spannteil 30 weist an einem Handgriff 31, der hier ebenfalls aber nicht notwendigerweise als flacher Hebelarm ausgebildet ist, einen unrunden, zylindrischen Spannzapfen 32 auf. Dessen Aussenmass erweitert sich über seinen Umfang stetig von einem Mass A über ein Mass B bis zu einem Mass C, wie dies in Fig. 2 c) dargestellt ist. Das grösste Mass C entspricht dabei dem der Bohrung 12 im Endabschnitt 11 am Bauteil 10. In Beispiel von Fig. 2 c) wird die unrunde Form durch zwei an einem Ende miteinander verbundene Halbkreise gebildet, wobei die sich an den anderen Enden ergebende Stufe gerade weggeschnitten ist und wobei der Durchmesser der beiden Halbkreise gerade dem Mass B bzw. C entspricht.

Zum Verspannen der beiden Bauteile 10 und 20 wird das zweite Bauteil 20 mit seiner Öffnung 22 auf den Endabschnitt 11 des ersten Bauteils 10 aufgesteckt. Wegen der Erweiterungen 26, 27 und 28 der Öffnung 22 ist dies mit ausreichend Spiel einfach ausführbar. Begrenzt ist das Aufstecken des zweiten Bauteils 20 auf das erste Bauteil 10 vorzugsweise durch einen am ersten Bauteil 10 ausgebildeten axialen Anschlag, welcher in Fig. 1 jedoch nicht dargestellt und auch nicht notwendigerweise am Endabschnitt 11 des Bauteils 10 selbst ausgebildet sein muss. Sodann wird das Spannteil 30 mit seinem Spannzapfen 32 durch die Öffnung 22 hindurch in die Bohrung 12 im Endabschnitt 11 des ersten Bauteils 10 eingesteckt, wobei dies in einer Drehstellung etwa wie in Fig. 1 dargestellt wegen der erläuterten, unrunden Geometrie des Spannzapfens 32 ebenfalls mit ausreichend Spiel einfach ausführbar ist. Schliesslich wird das Spannteil 30 mit seinem Spannzapfen 32 in der Bohrung 12 gedreht. Hierbei kommt es aufgrund der exzentrischen Anordnung der Bohrung 12 und der unrunden Geometrie des Spannzapfens 32 zu einer Keilwirkung zwischen den Teilen unter Druckausübung auf die Klemmfläche 25 bei gleichzeitiger Anlage der Anschlagflächen 13 und 23 aneinander sowie der Positionierfläche 24 an der Mantelfläche 14 des Endabschnitts 11.

Fig. 3 zeigt die beiden Bauteile 10 und 20 im miteinander verbundenen Zustand, wobei sich das Spannteil 30 in einer gegenüber Fig. 1 im Uhrzeigersinn verdrehten Spannstellung befindet, wie dies an der Drehstellung des hebelförmigen Handgriffs 31 deutlich erkennbar ist. Die Drehrichtung zum Erreichen der Spannstellung könnte auch umgekehrt gewählt sein. Zudem ist die Drehstellung des Hebelarms 31 relativ zu der des Spannzapfens 32 nach den jeweiligen Gegebenheiten wählbar.

Bei der dargestellten Spannstellung des Spannteils 30 soll es sich beispielsweise um eine mittlere Spannstellung handeln, über welche hinaus das Spannteil 30 unter Erhöhung des Drucks auf die genannten, in Anlage aneinander befindlichen Flächen weitergedreht werden könnte. Umgekehrt könnte das Spannteil 30 aus dieser Spannstellung auch ein Stück weit wieder zurückgedreht werden, ohne dass dabei die genannten Flächen sofort gegenseitiges Spiel bekommen.

Indem das Spannteil 30 in seiner Spannstellung selbst dem von ihm ausgeübten Klemmdruck unterliegt, ist es ebenfalls festgelegt und kann sich nicht ohne weiteres aus dieser Stellung wieder lösen. In Fig. 3 ist der Hebelarm 31 des Spannteils 30 dennoch durch den in ein Loch 29 im zweiten Bauteil 20 eingesteckten Arretierbolzen 40 zusätzlich gesichert. Auf diese Weise lässt sich ein Lösen der Verbindung beispielsweise durch ein ungewolltes Anstossen des Hebelarms 31 oder durch Vibrationen jedenfalls sicher verhindern.

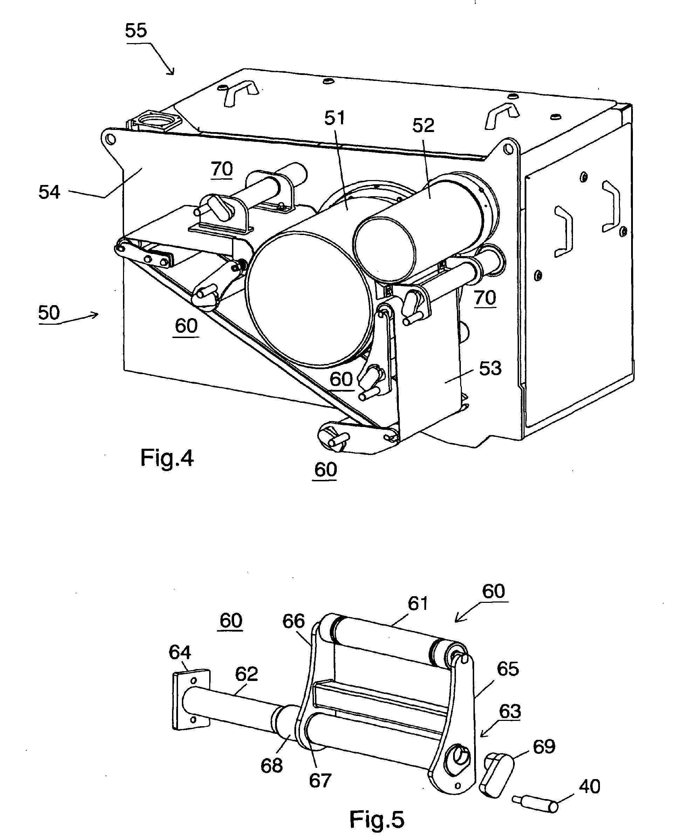

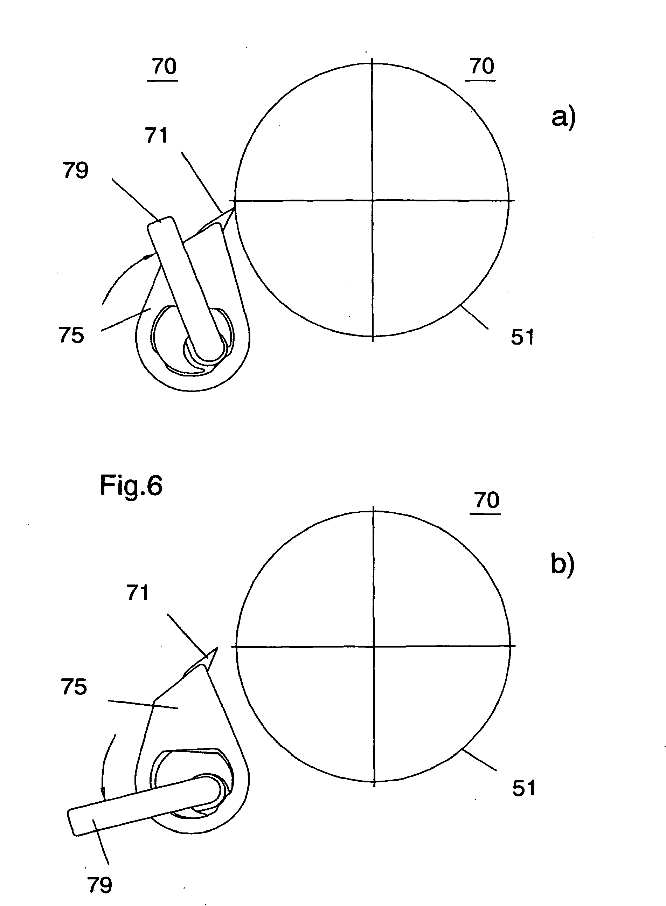

Befestigungsvorrichtungen der erfindungsgemässen Art sind bei der in Fig. 4 dargestellten Walzenkühlvorrichtung 50 mit Walzen 51 und 52 zur winkelgenauen Befestigung von Umlenkrollen (61 in Fig. 5) für ein Walzenband 53 bzw. für Abstreifer (71 in Fig. 6) eingesetzt. Eine die genannten Vorrichtungsteile an sich überdeckende Haube ist in Fig. 4 nicht dargestellt, um den Blick auf sie freizugeben. Sie sind auf der gleichen Seite einer Trennwand 54 gegenüber einem Raum 55 mit Antriebsaggregaten angeordnet und an der Trennwand 54 gehalten. Da sie mit dem zu walzenden und zu kühlenden Produkt in Berührung kommen, sind sie zusammen mit ihren Halterungen 60 bzw. 70 zu Reinigungszwecken mit den erfindungsgemässen Befestigungsvorrichtungen von Hand ohne Werkzeug aus- sowie anschliessend auch wieder einbaubar.

Fig. 5 zeigt eine der Halterungen 60 für eine der Umlenkrollen 61 von Fig. 4. Ein Bauteil 62, das dem vorstehend als erstes bezeichneten Bauteil 10 funktionell entspricht, ist wieder stangenförmig und an seinem freien Ende mit einem Endabschnitt 63 entsprechend dem Endabschnitt 11 von Fig. 1 versehen. An seinem gegenüberliegenden Ende weist das Bauteil 62 eine Montageplatte 64 für die Anbringung an der Trennwand 54 auf. Das vorstehend als zweites bezeichnete Bauteil ist hier ein Bügel mit zwei über eine Traverse miteinander fest verbundenen Armen 65 und 66, wobei die vorstehend als erste bezeichnete Öffnung in dem vorderen Arm 65 angeordnet ist. Eine weitere, kreiszylindrische Öffnung ist in dem hinteren Arm 66 ausgebildet, so dass der Bügel auf das stangenförmige Bauteil 62 wie dargestellt aufschiebbar ist. Die erste Öffnung übergreift dabei mit Spiel den Endabschnitt 63 und die weitere Öffnung passgenau einen gegenüber dem Endabschnitt 63 zurückversetzen, im Durchmesser ggf. erweiterten, kreiszylindrischen Abschnitt 67 des stangenförmigen Bauteils 62. Dem Abschnitt 67 schliesst sich ein weiterer, im Durchmesser ggf. nochmals erweiterter Abschnitt 68 an, so dass sich ein axialer, kragenförmiger Anschlag für den hinteren Arm 66 ergibt. Mit einem dem Spannteil 30 entsprechenden Spannteil 69 lässt sich der Bügel auf dem stangenförmigen Bauteil 62 in einer stets präzise gleichen Drehstellung lösbar befestigen. Zur Sicherung der Befestigung ist wieder ein Arretierbolzen 40 vorgesehen. Die Umlenkrolle 61 ist einfach lose in die beiden Arme 65, 66 eingehängt.

Fig. 6 zeigt noch in zwei Stirnansichten eine der Halterung 60 entsprechende Halterung 70, wobei anstelle einer Umlenkrolle ein Abstreifer 71 vorhanden ist. Fig. 6 a) zeigt den Bügel, von dem nur der vordere Arm 75 zu sehen ist, mit dem Spannteil 79 in einer Spannstellung auf dem stangenförmigen Bauteil 72 befestigt, wobei der Abstreifer 71 in seiner Funktionsstellung ist, in welcher er nur einen sehr geringen Abstand von einer Walze 51 aufweist, welcher präzise einzuhalten ist. Fig. 6 b) zeigt das Spannteil 79 in einer Drehstellung, in der die Verbindung gelöst und Spiel zwischen dem vorderen Arm 75 und dem Endabschnitt 73 des stangenförmigen Bauteils 72 vorhanden ist, so dass sich der Bügel ggf. demontieren lässt.

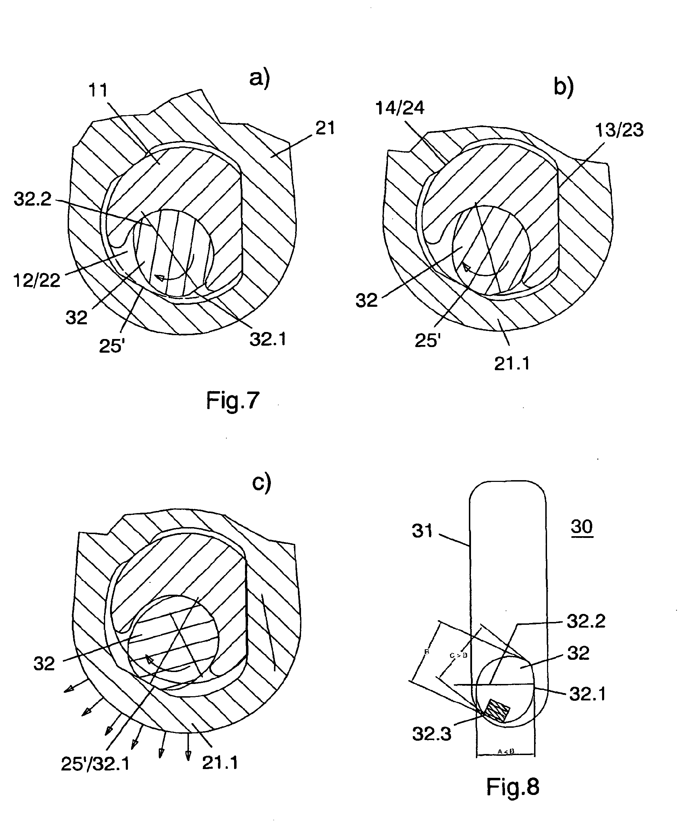

Fig. 7 zeigt unter a) - c) jeweils einen Querschnitt durch den Endabschnitt 11 des ersten Bauteiles 10, durch den nur teilweise dargestellten Hebelarm 21 des zweiten Bauteils 20 sowie durch den Spannzapfen 32 des Spannteils 30 in drei unterschiedlichen, durch die Hilfslinie 32.1 verdeutlichten Drehstellungen des Spannzapfens 32. Die Klemmfläche in der ersten Öffnung 22 im zweiten Bauteil 20 ist hier, anders als in Fig. 1b), nicht auf einer, durch eine strichlierte Linie angedeuteten, gedachten Kreiszylindermantelfläche sondern eben ausgebildet und deshalb mit 25' bezeichnet. Der Spannzapfen 32 ist andererseits, wie vorstehend anhand von Fig. 2 beschrieben, unrund ausgebildet, wobei seine unrunde Form hier jedoch stark übertrieben dargestellt ist. Seine auch in Fig. 2 vorhandene ebene Fläche ist mit 32.1 bezeichnet.

Fig. 7 a) zeigt den Spannzapfen 32 in einer Drehstellung, in der er gegenüber der Klemmfäche 25' Spiel hat. In dieser Drehstellung kann der Spannzapfen 32 durch die erste Öffnung 22 im Hebelarm 21 des zweiten Bauteils 20 hindurch in die Bohrung 12 im ersten Bauteil eingesteckt oder aus dieser zurückgezogen werden. Fig. 7 b) zeigt den Spannzapfen 32 im Uhrzeigersinn verdreht, wobei er aufgrund seiner unrunden Form gerade mit der Klemmfäche 25' in Berührung gekommen ist. Auch die ebene Anschlagfläche 23 ist hierbei in Anlage an der ebenen Anschlagfläche 13 und die Positionierfläche 24 an der Mantelfläche 14 des Endabschnitts 11 des ersten Bauteils 10. Beim Weiterdrehen des Spannzapfens 32 wird durch diesen Druck auf die Klemmfläche 25' ausgeübt und alle in Anlage aneinander befindlichen Flächen gegeneinander verspannt. Unter diesem Druck gibt zudem der ringförmige Abschnitt 21.1 des Hebelsarms 21 als der hinsichtlich seiner Stabilität schwächste Bereich der betrachteten Anordnung elastisch nach aussen etwas nach (in Fig. 7c) durch die Pfeile verdeutlicht), wodurch der Spannzapfen 32 weiter bis in die in Fig. 7 c) dargestellte Drehstellung gedreht werden kann. In dieser Drehstellung liegt seine ebene Fläche 32.1 an der ebenfalls ebenen Klemmfläche 25' an. Im Übergang von der Drehstellungen gemäss Fig. 7 b) in die Drehstellung gemäss Fig. 7 c) steigt der Klemmdruck und mit ihm die elastische Verformung des ringförmigen Abschnitts 21.1 zunächst an, nimmt nach Überwinden eines Maximalwertes danach jedoch wieder ab, allerdings nur soweit, dass nicht erneut ein Spiel zwischen den Teilen entsteht. In umgekehrter Drehrichtung muss das Maximum des Klemmdrucks natürlich ebenfalls überwunden werden. Der Spannzapfen 32 ist dadurch in der Drehstellung/Spannstellung gemäss Fig. 7 c) gegen ungewolltes Lösen beispielsweise unter der Wirkung von Vibrationen gesichert.

Wie erwähnt ist die unrunde Form des Spannzapfens 32 in Fig. 7, um überhaupt oder jedenfalls besser sichtbar zu sein, übertrieben dargestellt. Tatsächlich genügt es für eine wirksame Ausbildung des Druckmaximums, wenn die dafür verantwortliche Durchmessererweiterung des Spannzapfens 32 bzw. die durch sie verursachte elastische Verformung des ringförmigen Abschnitts 21.1 einige wenige Zentel eines Millimeters beträgt.

Wie ebenfalls erwähnt, ist die Ausbildung des zweiten Bauteils 20 als flacher Hebelarm 21 mit insbesondere dem ringförmigen Abschnitt 21.1 rein beispielhaft im Hinblick auf die anhand der Figuren 4 - 6 erläuterte Anwendung gewählt. Bei einer andersartigen Ausbildung des zweiten Bauteils könnte es insofern erforderlich sein, anstelle des ringförmigen Abschnitts 21.1 einen anderen oder andersartigen Bereich des zweiten Bauteils elastisch nachgiebig auszubilden um die vorbeschriebene Sicherung gegen ungewolltes Lösen zu realisieren. Andererseits oder zusätzlich könnte auch ein Federelement eingesetzt werden, welches beispielsweise, wie dies in Fig. 8 dargestellt und mit 32.3 bezeichnet, im Spannzapfen 32 eingelassen ist. Ein Federelement könnte auch im zweiten Bauteil 20 vorgesehen sein.

### BEZEICHNUNGSLISTE

- 10: erstes Bauteil
- 11: Endabschnitt am ersten Bauteil 10
- 12: stirnseitige Bohrung im Endabschnitt 11
- 13: erste, ebene Anschlagfläche
- 14: Mantelfläche des Endabschnitts 11
- 20: zweites Bauteil
- 21: Hebelarm
- 21.1: ringförmiger Abschnitt des Hebelsarms
- 22: zylindrische Öffnung
- 23: zweite, ebene Anschlagfläche
- 24: Positionierfläche
- 25, 25': Klemmfläche
- 26, 27, 28: Erweiterungen der Öffnung 22
- 29: Loch für Arretierbolzen 40 im zweiten Bauteil
- 30: Spannteil
- 31: Handgriff
- 32: Spannzapfen
- 32.1: ebene Fläche am Spannzapfen
- 32.2: Hilfslinie
- 32.3: Federelement im Spannzapfen
- 40: Arretierbolzen
- 50: Walzenkühlvorrichtung
- 51, 52: Walzen
- 53: Walzenband
- 54: Trennwand
- 55: Raum mit Antriebsaggregaten
- 60: Halterung für Umlenkrolle 61
- 61: Umlenkrolle
- 62: stangenförmiges Bauteil
- 63: Endabschnitt des Bauteils 62
- 64: Montageplatte
- 65: vorderer Arm
- 66: hinterer Arm
- 67: Abschnitt des Bauteils 62
- 68: Abschnitt des Bauteils 62
- 69: Spannteil
- 70: Halterung
- 71: Abstreifer
- 75: vorderer Arm
- 79: Spannteil

## Patentansprüche

1. Vorrichtung mit zwei durch ein Spannteil (30) in definierter relativer Winkelposition lösbar verbindbaren Bauteilen (10, 20), **dadurch gekennzeichnet,**
**dass** ein erstes der beiden Bauteile (10) einen Endabschnitt (11) aufweist, der ausgehend von einer kreiszylindrischen Form durch Abflachung mit einer ersten, ebenen Anschlagfläche (13) sowie mit einer exzentrischen, mit ihm nur teilweise, dagegen mit der ersten Anschlagfläche (13) überhaupt nicht überlappenden, stirnseitigen Bohrung (12) versehen ist,
**dass** das andere, zweite Bauteil (20) eine erste zylindrische Öffnung (22) aufweist, welche mit einer zweiten, ebenen Anschlagfläche (23) sowie einer Positionier- (24) und einer Klemmfläche (25) versehen ist, wobei zwischen diesen Flächen (23, 24, 25) jeweils Erweiterungen (26, 27, 28) vorhanden sind,
und **dass** das Spannteil (30) einen mit einem Handgriff (31) versehenen, unrunden, zylindrischen Spannzapfen (32) aufweist, dessen grösstes Mass (C) dem der Bohrung (12) im Endabschnitt (11) des ersten Bauteils (10) entspricht und der zum Verspannen der beiden Bauteile (10, 12) durch die erste Öffnung (22) hindurch in diese Bohrung (12) einsteckbar und darin unter zunehmender Druckausübung auf die Klemmfläche (25) bei gleichzeitiger Anlage der ebenen Anschlagflächen (13, 23) aneinander sowie der Positionierfläche (24) an der Mantelfläche (14) des Endabschnitts (11) des ersten Bauteils (10) verdrehbar ist.

2. Vorrichtung nach Anspruch 1, **dadurch gekennzeichnet,**
**dass** der Durchmesser des Endabschnitts (11) des ersten Bauteils (10) 1.5-fach - 4-fach grösser ist als der der Bohrung (12) in diesem Endabschnitt (11),
und/oder dass die Bohrung (12) im Endabschnitt (11) des ersten Bauteils (10) gegenüber der Achse dieses Endabschnitts (11) um das 0.25-fache - 1.5-fache ihres Durchmessers exzentrisch versetzt ist,
und/oder dass die Bohrung (12) im Endabschnitt (11) des ersten Bauteils (10) gegenüber der Achse dieses Endabschnitts (11) unter einem Winkel von 20° - 70° gegenüber der ersten Anschlagfläche (13) an diesem Endabschnitt (11) exzentrisch versetzt ist.

3. Vorrichtung nach einem der Ansprüche 1 - 2, **dadurch gekennzeichnet, dass** die Positionier- (24) und/oder die Klemmfläche (25) auf einer gedachten Kreiszylindermantelfäche liegen, deren Durchmesser vorzugsweise dem der kreiszylindrischen Ausgangsform des Endabschnitts (11) des ersten Bauteils (10) entspricht.

4. Vorrichtung nach einem der Ansprüche 1 - 3, **dadurch gekennzeichnet, dass** die zweite, ebene Anschlagfläche (23), die Positionier- (24) und die Klemmfläche (25) von der Achse der gedachten Kreiszylindermantelfäche aus gesehen unter einem Relativwinkel von 40° - 140°, insbesondere von 110°- 130°, angeordnet sind.

5. Vorrichtung nach einem der Ansprüche 1 - 4, **dadurch gekennzeichnet, dass** die Positionier- (24) und/oder die Klemmfläche (25) sich über einen Winkel (Δα) von 10° - 30°, vorzugsweise von 20°, erstrecken.

6. Vorrichtung nach einem der Ansprüche 1 - 5, **dadurch gekennzeichnet, dass** sich der Durchmesser des Spannzapfens (32) über seinen Umfang um 1% - 5%, vorzugsweise um 3%, ändert.

7. Vorrichtung nach einem der Ansprüche 1 - 6, **dadurch gekennzeichnet, dass** das Spannteil (30) als Handgriff (31) einen Hebelarm aufweist.

8. Vorrichtung nach Anspruch 7, **dadurch gekennzeichnet, dass** der Hebelarm (31) mit einem vorzugsweise in das zweite Bauteil (20) einsteckbaren Arretierbolzen (40) gegen Zurückdrehen aus einer Spannstellung arretierbar ist.

9. Vorrichtung nach einem der Ansprüche 1 - 8, **dadurch gekennzeichnet, dass** das erste Bauteil (62) stangenförmig ist und einen weiteren Abschnitt (67) mit einer kreiszylindrischen Mantelfläche aufweist, deren Durchmesser gleich oder grösser als der seines Endabschnitts (63) ist.

10. Vorrichtung nach Anspruch 9, **dadurch gekennzeichnet, dass** das zweite Bauteil ein Bügel mit zwei Armen (65, 66) ist, wobei die erste Öffnung in dem einen Arm (65) und eine weitere, kreiszylindrische Öffnung in dem anderen Arm (66) ausgebildet ist und dass der Bügel auf das stangenförmige Bauteil (62) aufschiebbar ist, wobei die erste Öffnung mit Spiel den Endabschnitt (63) und die weitere Öffnung den weiteren Abschnitt (67) des stangenförmigen Bauteils (62) passgenau übergreift.

11. Vorrichtung nach Anspruch 10, **dadurch gekennzeichnet, dass** der Bügel eine Umlenkrolle (61) oder einen Abstreifer (71) in einem definierten Abstand von einer Walze (51) einer Walzenkühlvorrichtung (50) zur kontinuierlichen Überführung einer heissen, fliessfähigen Masse unter Abkühlung in feste Chips hält.

12. Vorrichtung nach einem der Ansprüche 1 - 11, **dadurch gekennzeichnet, dass** beim Verdrehen des durch die erste Öffnung (22) im zweiten Bauteil (20) hindurch in die Bohrung (12) im Endabschnitt (11) des ersten Bauteils (10) eingesteckten Spannzapfens (32) die Druckausübung auf die Klemmfläche (25) nach Überwinden eines Maximalwertes wieder abnimmt.

13. Vorrichtung nach Anspruch 12, **dadurch gekennzeichnet, dass** bei der Überwindung des Maximalwertes das zweite Bauteil (20) durch den ausgeübten Druck elastisch deformiert wird.

14. Vorrichtung nach Anspruch 12 oder 13, **dadurch gekennzeichnet, dass** bei der Überwindung des Maximalwertes ein vorzugsweise im Spannzapfen (32) eingelassenes Federelement (32.3) durch den ausgeübten Druck elastisch deformiert wird.

## Claims

1. An apparatus having two components (10, 20) which can be releasably connected in a defined relative angular position by a clamping part (30), **characterized in**
**that** a first of the two components (10) has an end section (11) which, starting from a circular cylindrical shape, is provided with a first, planar stop surface (13) by flattening, and with an eccentric face-side hole (12) which overlaps it only partially and in contrast does not overlap the first stop surface (13) at all,
**that** the other, second component (20) has a first cylindrical opening (22) which is provided with a second, planar stop surface (23), a positioning surface (24) and a clamping surface (25), wherein enlargements (26, 27, 28) are in each case present between these surfaces (23, 24, 25),
and **that** the clamping part (30) has a non-circular, cylindrical clamping journal (32) which is provided with a handle (31) and the largest dimension (C) of which corresponds to that of the hole (12) in the end section (11) of the first component (10), which clamping journal (32) can be inserted through the first opening (22) into this hole (12) in order to clamp the two components (10, 20) and can be rotated therein (12) while exerting increasing pressure on the clamping surface (25) while the planar stop surfaces (13, 23) simultaneously bear against one another and the positioning surface (24) bears against the sleeve surface (14) of the end section (11) of the first component (10).

2. The apparatus as claimed in claim 1, **characterized in**
**that** the diameter of the end section (11) of the first component (10) is 1.5 times - 4 times larger than that of the hole (12) in this end section (11),
and/or that the hole (12) in the end section (11) of the first component (10) is offset eccentrically with respect to the axis of this end section (11) by 0.25 times - 1.5 times its diameter,
and/or that the hole (12) in the end section (11) of the first component (10) is offset eccentrically with respect to the axis of this end section (11) at an angle of 20° - 70° with respect to the first stop surface (13) on this end section (11).

3. The apparatus as claimed in one of claims 1 - 2, **characterized in that** the positioning surface (24) and/or the clamping surface (25) lie on an imaginary circular cylindrical sleeve surface, the diameter of which preferably corresponds to that of the circular cylindrical starting shape of the end section (11) of the first component (10).

4. The apparatus as claimed in one of claims 1 - 3, **characterized in that**, when viewed from the axis of the imaginary circular cylindrical sleeve surface, the second, planar stop surface (23), the positioning surface (24) and the clamping surface (25) are arranged at a relative angle of 40° - 140°, in particular of 110° - 130°.

5. The apparatus as claimed in one of claims 1 - 4, **characterized in that** the positioning surface (24) and/or the clamping surface (25) extend over an angle (Δα) of 10° - 30°, preferably of 20°.

6. The apparatus as claimed in one of claims 1 - 5, **characterized in that** the diameter of the clamping journal (32) varies over its circumference by 1% - 5%, preferably by 3%.

7. The apparatus as claimed in one of claims 1 - 6, **characterized in that** the clamping part (30) has a lever arm as a handle (31).

8. The apparatus as claimed in claim 7, **characterized in that** the lever arm (31) can be locked against being turned backwards out of a clamping position by means of a locking bolt (40) which can preferably be inserted into the second component (20).

9. The apparatus as claimed in one of claims 1 - 8, **characterized in that** the first component (62) is in the form of a bar and has a further section (67) with a circular cylindrical sleeve surface, the diameter of which is equal to or greater than that of its end section (63).

10. The apparatus as claimed in claim 9, **characterized in that** the second component is a frame with two arms (65, 66), wherein the first opening is formed in the one arm (65) and a further, circular cylindrical opening in the other arm (66), and that the frame can be pushed onto the bar-shaped component (62), wherein the first opening overlays the end section (63) with play and the further opening overlays the further section (67) of the bar-shaped component (62) with an accurate fit.

11. The apparatus as claimed in claim 10, **characterized in that** the frame holds a deflector roller (61) or a stripper (71) at a defined distance from a roller (51) of a roller cooling device (50) for continuously transferring a hot, free-flowing compound while cooling into solid chips.

12. The apparatus as claimed in one of claims 1 - 11, **characterized in that**, when the clamping journal (32), which is inserted through the first opening (22) in the second component (20) into the hole (12) in the end section (11) of the first component (10), is turned, the pressure exerted on the clamping surface (25) reduces once more after overcoming a maximum value.

13. The apparatus as claimed in claim 12, **characterized in that** the second component (20) is elastically deformed by the exerted pressure when overcoming the maximum value.

14. The apparatus as claimed in claim 12 or 13, **characterized in that** a spring element (32.3) which is preferably let into the clamping journal (32) is elastically deformed by the exerted pressure when overcoming the maximum value.

## Revendications

1. Dispositif comportant deux éléments (10, 20) pouvant être assemblés de façon démontable dans une position angulaire relative définie par une pièce de serrage (30), **caractérisé**
**en ce qu'**un premier (10) des deux éléments présente un segment terminal (11) qui est muni d'une première surface de butée plane (13) obtenue par formation d'un méplat en partant d'une forme cylindrique à base circulaire, ainsi que d'un perçage frontal excentré (12) qui est seulement partiellement à recouvrement avec lui mais pas du tout avec la première surface de butée (13) ;
**en ce que** l'autre ou second élément (20) présente une première ouverture cylindrique (22) qui est munie d'une seconde surface de butée plane (23) ainsi que d'une surface de positionnement (24) et d'une surface de coincement (25), des élargissements (26, 27, 28) étant respectivement présents entre ces surfaces (23, 24, 25) ;
et **en ce que** la pièce de serrage (30) présente un tourillon de serrage cylindrique non circulaire (32) qui est muni d'une manette (31), dont la plus grande dimension (C) correspond à celle du perçage (12) du segment terminal (11) du premier élément (10) et qui, pour le serrage des deux éléments (10, 20), est apte à être emboîté dans ce perçage (12) à travers la première ouverture (22) et y être tourné avec application d'une pression croissante sur la surface de coincement (25) et mise simultanée en appui des surfaces de butée planes (13, 23) l'une contre l'autre et, de même, de la surface de positionnement (24) contre la surface circonférentielle (14) du segment terminal (11) du premier élément (10).

2. Dispositif selon la revendication 1, **caractérisé**
**en ce que** le diamètre du segment terminal (11) du premier élément (10) est de 1,5 à 4 fois plus grand que celui du perçage (12) de ce segment terminal (11),
et/ou en ce que le perçage (12) du segment terminal (11) du premier élément (10) est déporté excentriquement de 0,25 à 1,5 fois son diamètre par rapport à l'axe de ce segment terminal (11) ;
et/ou en ce que le perçage (12) du segment terminal (11) du premier élément (10) est déporté excentriquement par rapport à l'axe de ce segment terminal (11) d'un angle de 20° à 70° par rapport à la première surface de butée (13) de ce segment terminal (11).

3. Dispositif selon l'une des revendications 1 et 2, **caractérisé en ce que** la surface de positionnement (24) et/ou la surface de coincement (25) se trouve(nt) sur une surface de paroi latérale cylindrique à base circulaire imaginaire, dont le diamètre correspond de préférence à celui de la forme cylindrique à base circulaire d'origine du segment terminal (11) du premier élément (10).

4. Dispositif selon l'une des revendications 1 à 3, **caractérisé en ce que**, vu de l'axe de la surface de paroi latérale cylindrique à base circulaire imaginaire, la seconde surface de butée plane (23), la surface de positionnement (24) et la surface de coincement (25) sont orientées sous un angle relatif de 40° à 140°, en particulier de 110° à 130°.

5. Dispositif selon l'une des revendications 1 à 4, **caractérisé en ce que** la surface de positionnement (24) et/ou la surface de coincement (25) s'étendent sur un angle (Δα) de 10° à 30°, de préférence de 20°.

6. Dispositif selon l'une des revendications 1 à 5, **caractérisé en ce que** le diamètre du tourillon de serrage (32) varie de 1 % à 5 %, de préférence de 3 %, sur sa périphérie.

7. Dispositif selon l'une des revendications 1 à 6, **caractérisé en ce que** la pièce de serrage (30) présente un bras de levier en tant que manette (31).

8. Dispositif selon la revendication 7, **caractérisée en ce que** le bras de levier (31) est apte à être arrêté à l'encontre de la rotation en sens inverse à partir d'une position de serrage, au moyen d'un doigt d'arrêt (40) qui peut être emmanché de préférence dans le deuxième élément (20).

9. Dispositif selon l'une des revendications 1 à 8, **caractérisé en ce que** le premier élément (62) est en forme de tige et présente un autre segment (67) possédant une surface de paroi latérale cylindrique à base circulaire, dont le diamètre est égal ou supérieur à celui de son segment terminal (63).

10. Dispositif selon la revendication 9, **caractérisé en ce que** le deuxième élément est un étrier possédant deux bras (65, 66), la première ouverture étant formée dans l'un (65) des bras, et une autre ouverture cylindrique à base circulaire, dans l'autre bras (66), et **en ce que** l'étrier est apte à être emmanché sur l'élément en forme de tige (62), la première ouverture entourant le segment terminal (63) avec jeu et l'autre ouverture entourant sans jeu l'autre segment (67) de l'élément en forme de tige (62).

11. Dispositif selon la revendication 10, **caractérisé en ce que** l'étrier tient un rouleau de renvoi (61) ou un racleur (71) à un écartement défini d'un cylindre (51) d'un dispositif de refroidissement à cylindre (50) servant à transformer de façon continue une masse chaude, capable de s'écouler, en copeaux solides sous l'effet d'un refroidissement.

12. Dispositif selon l'une des revendications 1 à 11, **caractérisé en ce que**, lorsque l'on tourne le tourillon de serrage (32) qui est emmanché, à travers la première ouverture (22) du deuxième élément (20), dans le perçage (12) du segment terminal (11) du premier élément (10), l'application d'une pression sur la surface de coincement (25) décroît de nouveau après avoir franchi une valeur maximale.

13. Dispositif selon la revendication 12, **caractérisé en ce que**, lors du franchissement de la valeur maximale, le deuxième élément (20) se déforme élastiquement sous l'action de la pression exercée.

14. Dispositif selon l'une des revendications 12 ou 13, **caractérisé en ce que**, lors du franchissement de la valeur maximale, un élément élastique (32.3) qui est de préférence encastré dans le tourillon de serrage (32) se déforme élastiquement sous l'action de la pression exercée.
